# FASCICULE DE BREVET EUROPEEN

(11) **EP 0 890 193 B1**
(45) Date de publication et mention de la délivrance du brevet: **10.10.2001**
(21) Numéro de dépôt: 97947144.8
(22) Date de dépôt: 27.11.1997
(51) Int. Cl.: H01M 2/34, H01M 2/12

(54) **GENERATEUR ELECTROCHIMIQUE ETANCHE EQUIPE D'UNE BORNE COUPE-CIRCUIT**
DICHTER ELEKTROCHEMISCHER GENERATOR MIT ENDSCHUTZSCHALTER
SEALED ELECTROCHEMICAL GENERATOR EQUIPPED WITH A CIRCUIT-BREAKER TERMINAL

(30) Priorité: 28.11.1996 FR 9614586
(43) Date de publication de la demande: 13.01.1999
(73) Titulaire: SAFT, F-93230 Romainville (FR)
(72) Inventeur: DEWULF, Frédéric, F-86000 Poitiers (FR); GERIN, Norbert, F-86280 Saint-Benoît (FR)
(74) Mandataire: Laroche, Danièle
(86) Numéro de dépôt international: FR9702136
(87) Numéro de publication internationale: WO9824133

(56) Documents cités:
- WO-A-96/01504
- FR-A- 2 743 452
- US-A- 3 939 011
- US-A- 5 523 178
- PATENT ABSTRACTS OF JAPAN vol. 095, no. 011, 26 décembre 1995 & JP 07 226196 A (SONY CORP), 22 août 1995,
- PATENT ABSTRACTS OF JAPAN vol. 096, no. 010, 31 octobre 1996 & JP 08 162094 A (JAPAN STORAGE BATTERY CO LTD), 21 juin 1996,
- PATENT ABSTRACTS OF JAPAN vol. 097, no. 003, 31 mars 1997 & JP 08 293301 A (WAKO DENSHI KK), 5 novembre 1996,
- PATENT ABSTRACTS OF JAPAN vol. 095, no. 010, 30 novembre 1995 & JP 07 169452 A (A T BATTERY:KK), 4 juillet 1995,

## Description

La présente invention concerne un générateur électrochimique étanche équipé d'une borne coupe-circuit assurant la liaison électrique entre une pièce de contact extérieure de ladite borne et l'une des électrodes positive ou négative du générateur, ladite pièce de contact extérieure de la borne étant électriquement reliée à une paroi conductrice assurant l'étanchéité de la borne et étant susceptible de se déformer sous l'action d'une augmentation de la pression interne, ladite paroi étant reliée à ladite électrode par des moyens assurant la continuité électrique, cette continuité électrique étant interrompue lors de l'apparition d'une pression interne P supérieure à une valeur déterminée P1 provoquant la déformation de ladite paroi et la rupture d'une liaison entre la paroi et une pièce de rupture.

Le brevet des Etats Unis 4 943 497 décrit un tel générateur.

Ce dispositif est particulièrement utile pour les accumulateurs Li-Ion. Ceux-ci sont constitués généralement par une électrode positive dont la matière active est un oxyde métallique lithié souvent choisi parmi les oxydes de cobalt, nickel et manganèse ou leurs mélanges, une électrode négative dont la matière active est un matériau carboné choisi parmi les graphites, naturels ou artificiels, les cokes ou les carbones amorphes, et leurs mélanges, susceptible d'accueillir du lithium lors de la charge, et un électrolyte non aqueux. Ces accumulateurs présentent l'avantage d'une très grande énergie spécifique, mais nécessitent un contrôle strict de la tension de fin de charge. Lorsque la limite est largement dépassée, consécutivement à une défaillance des circuits de protection et de contrôle généralement associés, des réactions secondaires peuvent se produire. Celles-ci sont généralement associées à une augmentation de la pression et de la température, et il est opportun de pouvoir interrompre suffisamment tôt la réaction de surcharge en interrompant le circuit.

Le document cité décrit donc un tel coupe-circuit interne interrompant le courant de charge dès que la pression interne s'accroît d'une façon anormale. Néanmoins, il peut se faire que la pression continue à monter et pour éviter l'explosion, il est prévu dans le document antérieur cité ci-dessus que la paroi conductrice déformable, assurant l'étanchéité de la borne, comporte un affaiblissement de sa résistance mécanique de telle sorte qu'elle vienne à se rompre si la pression continue à monter permettant ainsi le dégagement des gaz vers l'extérieur et évite ainsi l'explosion de l'élément.

Ainsi, cette paroi déformable assure donc deux fonctions distinctes : 1, elle assure la coupure du circuit électrique en cas de montée dangereuse de la pression, 2, elle assure le dégagement des gaz en évitant l'explosion si la pression continue à monter.

Cette double fonction n'est pas souhaitable car il est très difficile d'assurer la fiabilité de fonctionnement d'un tel dispositif et le risque est grand que, lors d'une augmentation de pression, la paroi, comportant des affaiblissements mécaniques ne vienne à se déchirer, avant d'atteindre la pression à laquelle la déconnexion électrique doit se produire.

De plus, dans ce cas, la pression ne pourra plus monter en cas de surcharge et la déconnexion électrique ne pourra pas se produire, et il y aura ainsi risque d'explosion.

La présente invention a pour but de proposer un système beaucoup plus fiable dans son fonctionnement et a pour objet un générateur électrochimique tel que défini ci-dessus, caractérisé en ce que ladite borne coupe-circuit traverse d'une façon étanche un couvercle de fermeture du générateur dont elle est électriquement isolée, et en ce que ledit couvercle est en outre équipé, séparément, d'un opercule de sécurité se rompant sous une pression P₂>P₁.

Ainsi, selon l'invention, les fonctions sont nettement séparées et obtenues par deux organes tout à fait distincts, la paroi conductrice déformable assurant l'étanchéité de la borne n'a qu'une seule fonction celle, lors de sa déformation sous l'effet d'une élévation de pression, de couper la liaison électrique entre la paroi et l'électrode. Par ailleurs, l'opercule n'a aussi qu'une fonction, celle de se déchirer sous une pression P₂>P₁. Les pressions P₁ et P₂ étant nettement distinctes, par exemple de 5 à 9 bars pour P₁ et de 10 à 20 bars pour P₂, il est facile de déterminer sur des organes séparés les résistances mécaniques limites permettant respectivement d'effectuer les deux fonctions à ces deux niveaux de pression. La fiabilité est beaucoup plus grande que dans le cas de l'art antérieur cité.

Un avantage appréciable découlant du fait que la borne coupe-circuit est montée sur un couvercle de fermeture du générateur et ne constitue pas elle-même le couvercle comme c'est le cas dans le document antérieur cité, est que, selon la présente invention, on peut prévoir une unique dimension standard de borne coupe-circuit et aussi de l'opercule, adaptables sur tout générateur quelle que soit sa dimension. Ainsi, les efforts de résistance nécessaires des matériaux utilisés ne sont calculés qu'une fois. Dans l'art antérieur cité, le calcul des efforts est à effectuer spécifiquement pour chaque dimensionnement (dans le plan parallèle à la paroi déformable) distinct de générateurs.

L'invention est particulièrement applicable aux éléments de générateurs prismatiques.

On va maintenant donner la description d'un exemple de mise en oeuvre de l'invention faite ci-après en référence au dessin annexé dans lequel :
la figure 1 montre en perspective un générateur électrochimique selon l'invention,
la figure 2 montre isolément, en coupe, une borne coupe-circuit montée sur le couvercle du générateur de la figure 1,
la figure 3 est une vue de dessus d'une pièce de la figure 2,
la figure 4 est une coupe selon IV-IV de la figure 3,
la figure 5 montre isolément, en coupe, selon V-V de la figure 6, le couvercle du générateur de la figure 1, équipé de la borne coupe-circuit (vue extérieurement), et de l'opercule de rupture,
la figure 6 est une vue de dessous de la figure 5.

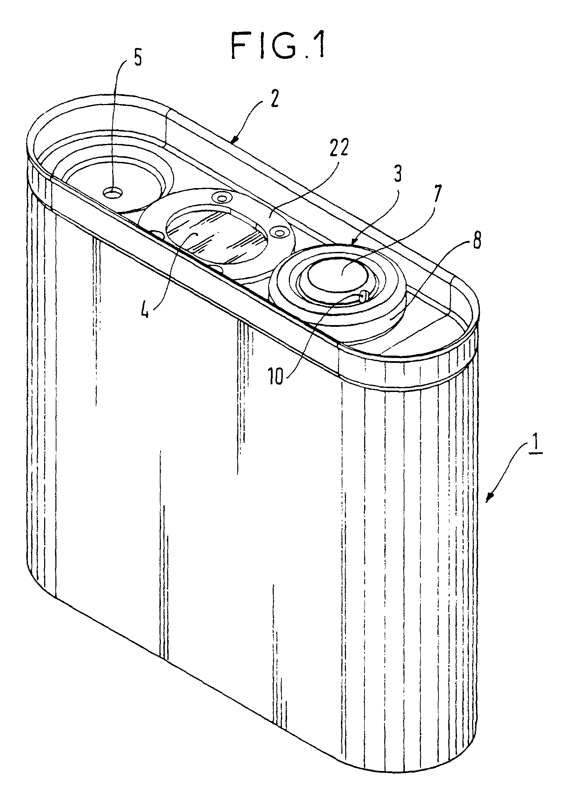

Ainsi, en se référant à la figure 1, on voit un générateur électrochimique 1, par exemple du type au lithium-ion, comportant un couvercle de fermeture 2 équipée d'une borne coupe-circuit 3, et d'un opercule de sécurité 4 séparé. Le couvercle comporte également un emplacement avec un trou 5 pour le remplissage de l'électrolyte. Bien entendu, ce trou est ensuite obturé.

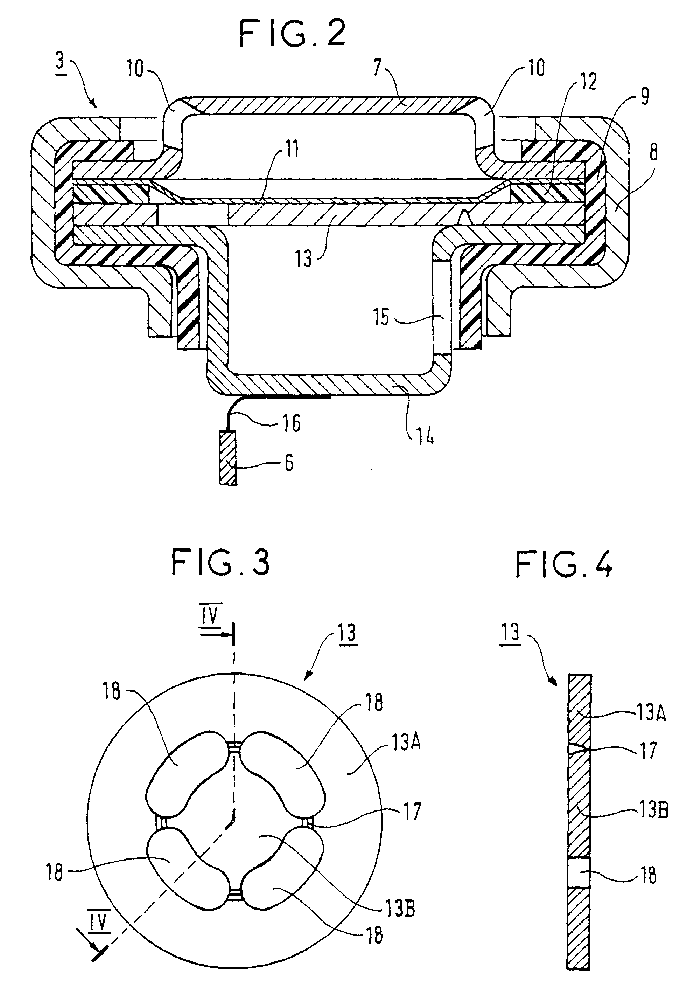

La figure 2 montre le détail de la borne coupe-circuit 3. Cette borne assure la liaison électrique entre l'électrode positive 6 du générateur et une pièce de contact extérieure 7 faisant partie de la borne. Par ailleurs, cette borne a en outre une fonction de coupe-circuit interne, fonctionnant lorsque la pression interne au générateur atteint une pression interne P égale à une valeur déterminée P₁ par exemple de 5 à 9 bars.

La borne est constituée d'un ensemble de pièces serties dans un collier externe 8 avec interposition d'un collier isolant 9. L'ensemble est soudé d'une façon étanche sur le couvercle 2. Ainsi, dans l'isolant 9 et le collier externe 8 sont assemblées par sertissage du collier externe : la pièce de contact extérieure 7 en forme de coupelle, ajourée de trous 10, une membrane 11, une rondelle isolante 12, un disque de rupture 13 et une coupelle inférieure 14 ajourée de trous 15.

La coupelle inférieure 14 est reliée à l'électrode 6 par une connexion 16.

La membrane 11 constitue une paroi assurant, avec le collier isolant 9, l'étanchéité interne de la borne. Cette paroi est susceptible de se déformer sous l'action d'une augmentation de pression à l'intérieur du générateur. En fonctionnement normal, elle assure en outre, avec le disque de rupture 13, la coupelle inférieure 14 et la connexion 16, la continuité électrique entre la pièce extérieure 7 et l'électrode 6. Outre son serrage en périphérie, par le collier externe 8, contre les autres pièces, la membrane 11 est aussi fixée au centre du disque de rupture 13 par un point de soudure central non représenté sur la figure.

Les figures 3 et 4 montrent en détail le disque de rupture 13. Comme on le voit, il comprend une partie périphérique 13A et une partie centrale 13B qui n'est reliée à la partie périphérique que par quatre faibles isthmes de matière 17 séparés les uns des autres par des lumières 18. Ainsi, lors d'une augmentation de la pression interne P du générateur au niveau de la valeur P₁, la membrane 11 se déforme brusquement jusqu'à retourner sa concavité vers le bas, entraînant la partie centrale 13B du disque en brisant les isthmes 17. La continuité électrique est ainsi rompue entre la membrane et la partie externe 13A du disque de rupture. Le circuit électrique est ainsi coupé définitivement mais l'étanchéité est parfaitement conservée, la membrane déformable 11 est résistante.

La nature de la membrane doit être compatible chimiquement avec le contenu des matières constituant le couple électrochimique, fonction de la polarité de l'électrode à laquelle le dispositif selon l'invention est rattaché. Par exemple, dans le cas d'un accumulateur Li-IOn, la polarité est généralement positive, et dans ce cas la membrane (11), ainsi que les pièces (13) et (14) sont réalisées avec un métal résistant à l'oxydation de la matière activie positive, qui peut être avantageusement l'aluminium. La polarité peut également être négative, auquel cas l'aluminium ne convient pas, car il réagit avec le lithium contenu dans l'électrode négative pour former un alliage. La membrane (11), ainsi que les pièces (13) et (14) associées sont alors avantageusement réalisées avec de l'acier nickelé, du nickel ou du cuivre, par exemple, ou tout autre métal stable au potentiel du lithium.

La pression désirée de retournement de la membrane sera fonction de ses caractéristiques. Ainsi une membrane d'aluminium dont la pression de retournement est d'environ 7 bars, a les caractéristiques suivantes : épaisseur :0,08 mm, diamètre : 8,5 mm.

La borne coupe-circuit 3 est de dimension standard et peut être adaptée sur le couvercle de générateurs de dimensions variables. Le disque de rupture 13 est calculé une fois pour toutes puisque la pression devant occasionner la rupture s'applique sur une surface constante de membrane quelle que soit la dimension du générateur.

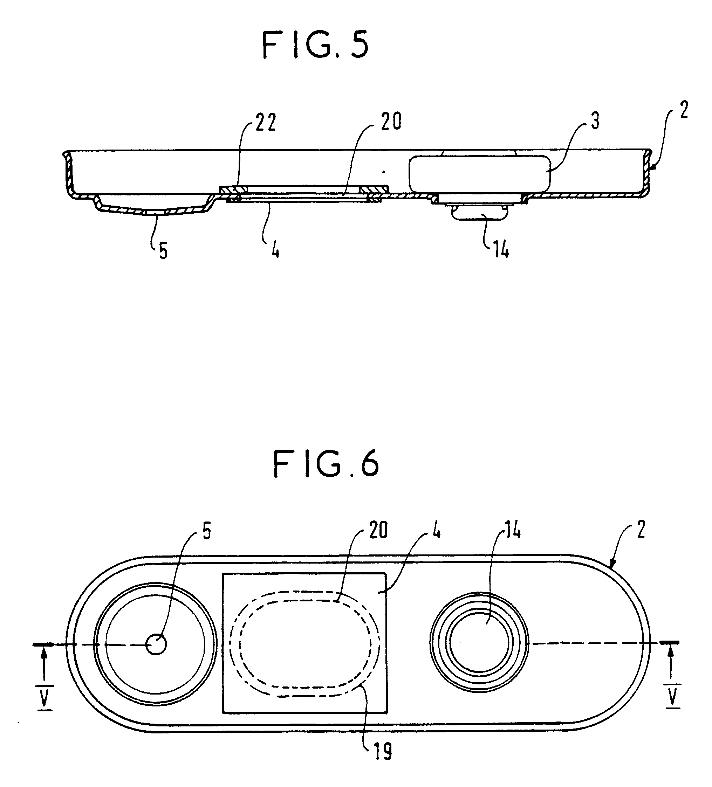

En se référant maintenant aux figures 5 et 6 représentant séparément le couvercle 2 du générateur de la figure 1, on voit que ce couvercle est équipé, outre la borne coupe-circuit 2 qui vient d'être décrite, d'un opercule de sécurité 4.

Cet opercule de sécurité 4 est constitué d'un feuillard rectangulaire (figure 6) soudée selon une ligne continue étanche 19, sur la surface interne du couvercle 2, sur le pourtour d'une ouverture 20 pratiquée dans ce couvercle.

Si la pression dépasse une valeur P₂, supérieure à 10 bars par exemple, de préférence entre 10 et 20 bars, l'opercule 4 se déchire, sachant que le reste du générateur peut supporter sans exploser une pression nettement supérieure, par exemple 40 bars.

Ainsi, d'une part, il n'y a aucun risque d'explosion et d'autre part, si le coupe-circuit ayant fonctionné, la pression cesse de croître ou, en tout cas, n'atteint pas la valeur P₂ (bien distincte de P₁) le générateur reste étanche et aucune fuite n'est à craindre.

Comme on peut le voir sur la figure 1 et sur la figure 5, une bague de renfort 22 est soudée sur le couvercle 2 au-dessus de l'ouverture 20.

## Revendications

1. Générateur électrochimique étanche (1) équipé d'une borne coupe-circuit (3) assurant la liaison électrique entre une pièce de contact extérieure (7) de ladite borne et l'une (6) des électrodes, positive ou négative du générateur, ladite pièce de contact extérieure (7) de la borne étant électriquement reliée à une paroi (11) assurant l'étanchéité de la borne et étant susceptible de se déformer sous l'action d'une augmentation de la pression interne, ladite paroi (11) étant reliée à ladite électrode (6) par des moyens (13, 14, 16) assurant la continuité électrique, cette continuité étant interrompue lors de l'apparition d'une pression interne supérieure à une valeur déterminée P₁ provoquant la déformation de ladite paroi et la rupture d'une liaison, entre la paroi (11) et une pièce de rupture (13), **caractérisé en ce que** ladite borne coupe-circuit (3) traverse d'une façon étanche un couvercle de fermeture (2) du générateur dont elle est électriquement isolée, et **en ce que** ledit couvercle est en outre équipé séparément d'un opercule de sécurité (4) se rompant sous une pression P₂>P₁.

2. Générateur selon la revendication 1, **caractérisé en ce que** ladite valeur P₁ de la pression est de 5 à 9 bars.

3. Générateur selon l'une des revendications 1 ou 2, **caractérisé en ce que** la valeur P₂ de la pression pour laquelle l'opercule de sécurité (4) se rompt est supérieure à 10 bars et de préférence comprise entre 10 et 20 bars.

4. Générateur selon l'une des revendications 1 à 3, **caractérisé en ce que** ladite borne coupe-circuit (3) est la borne positive et **en ce que** ladite paroi (11) assurant l'étanchéité et susceptible de se déformer, ainsi que ladite pièce de rupture (13) et qu'une coupelle inférieure (14) assurant ladite continuité électrique entre ladite paroi (11) et une connexion (6) reliée à ladite électrode (6), sont en aluminium.

5. Générateur selon l'une des revendications 1 à 3, **caractérisé en ce que** ladite borne coupe-circuit (3) est la borne négative et **en ce que** ladite paroi (11) assurant l'étanchéité et susceptible de se déformer, ainsi que ladite pièce de rupture (13) et qu'une coupelle inférieure (14) assurant ladite continuité électrique entre ladite paroi (11) et une connexion (6) reliée à ladite électrode (6), sont en métal choisi parmi l'acier nickelé, le nickel ou le cuivre.

6. Générateur selon l'une des revendications 1 à 5, **caractérisé en ce qu'**il comprend une électrode positive dont la matière active est un oxyde métallique lithié, une électrode négative dont la matière active est un matériau carboné susceptible d'accueillir du lithium lors de la charge, et un électrolyte non aqueux.

7. Générateur selon la revendication 5, **caractérisé en ce que** ledit oxyde métallique est choisi parmi les oxydes de cobalt, nickel et manganèse, et leurs mélanges.

8. Générateur selon l'une des revendications 6 ou 7, **caractérisé en ce que** ledit matériau carboné est choisi parmi les graphites, naturels ou artificiels, les cokes ou les carbones amorphes et leurs mélanges.

## Patentansprüche

1. Dichter elektrochemischer Generator (1) mit einem Endschutzschalter (3), der die elektrische Verbindung zwischen einem äußeren Kontaktstück (7) der Klemme und einer (6) der Elektroden, positiv oder negativ, des Generators gewährleistet, wobei das äußere Kontaktstück (7) der Klemme mit einer Wand (11) elektrisch verbunden ist, die die Dichtigkeit der Klemme gewährleistet und in der Lage ist, sich unter der Wirkung einer Zunahme des Innendrucks zu verformen, wobei die Wand (11) mit der Elektrode (6) über Mittel (13, 14, 16) verbunden ist, die die elektrische Kontinuität gewährleisten, wobei diese Kontinuität beim Auftreten eines Innendrucks, der einen vorgegebenen Wert P₁ überschreitet, der die Verformung der Wand und das Brechen einer Verbindung zwischen der Wand (11) und einem Sollbruch-Stück (13) hervorruft, unterbrochen wird, **dadurch gekennzeichnet, dass** der Endschutzschalter (3) einen Verschlussdeckel (2) des Generators, von dem er elektrisch isoliert ist, dicht durchquert, und dass der Deckel ferner getrennt mit einem Sicherheitshütchen (4) ausgestattet ist, das unter einem Druck P₂ > P₁ bricht.

2. Generator nach Anspruch 1, **dadurch gekennzeichnet, dass** der Druckwert P₁ zwischen 5 und 9 bar beträgt.

3. Generator nach einem der Ansprüche 1 oder 2, **dadurch gekennzeichnet, dass** der Druckwert P₂, bei dem das Sicherheitshütchen (4) bricht, größer als 10 bar ist und vorzugsweise zwischen 10 und 20 bar liegt.

4. Generator nach einem der Ansprüche 1 bis 3, **dadurch gekennzeichnet, dass** der Endschutzschalter (3) die positive Klemme ist, und dass die Wand (11), die die Dichtigkeit gewährleistet und in der Lage ist sich zu verformen, sowie das Sollbruch-Stück (13) und ein unterer Tiegel (14), der die elektrische Kontinuität zwischen der Wand (11) und einer mit der Elektrode (6) verbundenen Verbindung (6) gewährleistet, aus Aluminium sind.

5. Generator nach einem der Ansprüche 1 bis 3, **dadurch gekennzeichnet, dass** der Endschutzschalter (3) die negative Klemme ist, und dass die Wand (11), die die Dichtigkeit gewährleistet und in der Lage ist sich zu verformen, sowie das Sollbruch-Stück (13) und ein unterer Tiegel (14), der die elektrische Kontinuität zwischen der Wand (11) und einer mit der Elektrode (6) verbundenen Verbindung (6) gewährleistet, aus einem Metall bestehen, das unter Nickelstahl, Nickel oder Kupfer ausgewählt ist.

6. Generator nach einem der Ansprüche 1 bis 5, **dadurch gekennzeichnet, dass** er eine positive Elektrode, daran aktives Material ein lithiumhaltiges Metalloxid ist, eine negative Elektrode, deren aktives Material ein kohlenstoffhaltiges Material ist, das in der Lage ist, beim Laden Lithium aufzunehmen, und einen nichtwässrigen Elektrolyten umfasst.

7. Generator nach Anspruch 5, **dadurch gekennzeichnet, dass** das Metalloxid unter den Oxiden von Kobalt, Nickel und Mangan und ihren Gemischen ausgewählt ist.

8. Generator nach einem der Ansprüche 6 oder 7, **dadurch gekennzeichnet, dass** das kohlenstoffhaltige Material unter den natürlichen oder künstlichen Graphiten, Koks oder amorphen Kohlenstoffen sowie deren Gemischen ausgewählt ist.

## Claims

1. A sealed electrochemical cell (1) fitted with a circuit-breaking terminal (3) which ensures electrical connection between an external contact part (7) of said terminal and one (6) of the positive or negative electrodes of the cell, said external contact part (7) of the terminal being electrically connected to a wall (11) which ensures that the terminal is sealed and which is capable of being deformed under the action of an increase in internal pressure, said wall (11) being connected to said electrode (6) by means (13, 14, 16) which ensure electrical continuity, said continuity being interrupted when an internal pressure is reached which is greater than a determined value P₁, causing said wall to deform and the connection between the wall (11) and a break part (13) to break, the cell being **characterized in that** said circuit-breaking terminal (3) passes in sealed manner through a closure lid (2) of the cell from which it is electrically insulated, and **in that** said lid is also fitted separately with a safety capsule (4) which breaks under a pressure P₂ > P₁.

2. A cell according to claim 1, **characterized in that** said value P₁ of the pressure lies in the range 5 bars to 9 bars.

3. A cell according to claim 1 or 2, **characterized in that** the value P₂ of the pressure at which the safety capsule (4) breaks is greater than 10 bars, and preferably lies in the range 10 bars to 20 bars.

4. A cell according to any one of claims 1 to 3, **characterized in that** said circuit-breaking terminal (3) is the positive terminal, and **in that** said wall (11) which ensures sealing and which is capable of being deformed, and said break part (13), and a bottom dish (14) which ensures said electrical continuity between said wall (11) and a connection (16) connected to said electrode (6), are both made of aluminum.

5. A cell according to any one of claims 1 to 3, **characterized in that** said circuit-breaking terminal (3) is the negative terminal, and **in that** said wall (11) which ensures sealing and which is capable of being deformed, and said break part (13), and a bottom dish (14) which ensures said electrical continuity between said wall (11) and a connection (16) connected to said electrode (6), are made of metal selected from nickel-plated steel, nickel, and copper.

6. A cell according to any one of claims 1 to 5, **characterized in that** it comprises a positive electrode whose active material is a lithium-containing metal oxide, a negative electrode whose active material is a carbon-containing material which is capable of receiving lithium during charging, and a non-acqueous electrolyte.

7. A cell according to claim 5, **characterized in that** said metal oxide is selected from cobalt, nickel, and manganese oxides, and mixtures thereof.

8. A cell according to claim 6 or 7, **characterized in that** said carbon-containing material is selected from natural and artificial graphites, amorphous carbons and cokes, and mixtures thereof.
